# EUROPÄISCHE PATENTSCHRIFT

(11) **EP 3 201 065 B1**
(45) Veröffentlichungstag und Bekanntmachung des Hinweises auf die Patenterteilung: **27.02.2019**
(21) Anmeldenummer: 15771614.3
(22) Anmeldetag: 01.10.2015
(51) Int. Cl.: B62B 5/04, B62B 5/06

(54) **PLATTFORMWAGEN**
PLATFORM TROLLEY
CHARIOT À PLATEFORME

(30) Priorität: 02.10.2014 DE 102014220067
(43) Veröffentlichungstag der Anmeldung: 09.08.2017
(73) Patentinhaber: KUKA Systems GmbH, 86165 Augsburg (DE)
(72) Erfinder: STOCKSCHLÄDER, Julian, 86152 Augsburg (DE); ZUNKE, Richard, 86159 Augsburg (DE); LACHNER, Johannes, 85250 Pipinsried (DE)
(74) Vertreter: Mader, Joachim
(86) Internationale Anmeldenummer: PCT/EP2015/072703
(87) Internationale Veröffentlichungsnummer: WO 2016/050914

(56) Entgegenhaltungen:
- CH-A- 279 881
- DE-U1- 20 312 581
- GB-A- 1 078 966
- US-A- 2 772 113
- US-A- 4 302 025

## Beschreibung

### 1. Gebiet der Erfindung

Die vorliegende Erfindung betrifft einen Plattformwagen für die ortsflexible Aufstellung von Produktionsmitteln und ein entsprechendes Verfahren zum örtlichen Festlegen eines verfahrbaren Plattformwagens.

### 2. Stand der Technik

Bei steigender Variantenvielfalt und gleichzeitig sinkenden Stückzahlen von Produkten besteht ein Bedarf an flexiblen und wandlungsfähigen Lösungen für die industrielle Produktion. Ein Baustein einer solchen flexiblen Produktion sind Plattformwagen, die unterschiedlichste Produktionsmittel, wie Messmittel, Montagehilfsmittel, Manipulatoren oder ähnliches, tragen können und die innerhalb kurzer Zeit meist manuell an ihren Einsatzort gefahren werden können und dort in Betrieb genommen werden können.

Zur Inbetriebnahme werden die Plattformwagen am Einsatzort mit dem Boden verriegelt, um für die Dauer des Einsatzes einen sicheren Stand und eine möglichst exakt definierte Position aufzuweisen. Aufgrund der Verriegelung mit dem Boden können Plattformwagen die Kräfte der Produktionsmittel in den Boden einleiten, ohne dass die Gefahr besteht, dass die Plattformwagen durch die Kräfte verschoben werden. Weiterhin können die Plattformwagen elektrisch angeschlossen und mit der Umgebung datentechnisch vernetzt sein.

Aus der Druckschrift DE 203 12 581 U1 ist ein ortsflexibler Messwagen für Bearbeitungsstationen gemäß dem Oberbegriff von Anspruch 1 bekannt. Der Messwagen ist mit einer Positionierungseinrichtung in Form einer Indexiereinrichtung ausgestattet. Hierbei weist der Messwagen Indexstifte auf, die mit drei oder mehr räumlich verteilten, im Boden angeordneten Indexaufnahmen kooperieren. Die Indexstifte weisen an Ihren Enden radial überstehende drehbare Führungsrollen auf, die durch Seitenbewegungen des Messwagens mit den entsprechend geformten Indexaufnahmen hinterschneidend in Eingriff gelangen können. Die Arretierung des Messwagens am Boden ist daher besonders stabil aber der Arretierungsvorgang nicht besonders komfortabel.

Aus der Patentschrift US 4,302,025 A ist ein Wagen für blattförmige Gegenstände bekannt, der eine aus dem Wagen nach unten ausfahrbare Bremsvorrichtung aufweist. Die Patentschrift CH 279881 A offenbart einen fahrbaren Tisch, der mittels Rollen verfahren werden kann. Hierbei können die Rollen mittels eines Hebelmechanismus nach unten verfahren werden, um den Tisch von seinen Tischbeinen abzuheben. Aus der Patentschrift US 2,772,113 A ist ein motorbetriebener Golfwagen bekannt, welcher eine Bremse in Form einer spitzen Stange aufweist, die in den Boden des Golfplatzes eindringen kann.

Es ist eine Aufgabe der vorliegenden Erfindung eine Positionierung von Plattformwagen am Einsatzort zu vereinfachen und zu verbessern.

### 3. Zusammenfassung der Erfindung

Die oben genannte Aufgabe wird gelöst durch einen Plattformwagen für eine ortsflexible Aufstellung von Produktionsmitteln gemäß Anspruch 1 und ein entsprechendes Verfahren zum örtlichen Festlegen eines verfahrbaren Plattformwagens nach Anspruch 11.

Insbesondere wird die oben genannte Aufgabe gelöst durch einen Plattformwagen für eine ortsflexible Aufstellung von Messmitteln, Montagehilfsmitteln oder Manipulatoren, aufweisend eine nach unten aus dem Plattformwagen ausfahrbare Absteckvorrichtung, wobei der Plattformwagen bei eingefahrener Absteckvorrichtung verfahrbar ist und bei ausgefahrener Absteckvorrichtung mit dem Boden verrastbar ist. Dadurch, dass eine Absteckvorrichtung bereitgestellt wird, die aus dem Plattformwagen ein- und ausfahrbar ist, ist die Ortsfixierung des Plattformwagens sehr einfach und komfortabel durchführbar. Insbesondere sind keine Schwenkbewegungen des Plattformwagens notwendig. Es wurde von den Erfindern erkannt, dass aufgrund des Gewichts des Plattformwagens für die meisten Anwendungsfälle zusätzlich zu der Absteckvorrichtung keine weitere Kippsicherung notwendig ist.

Die Absteckvorrichtung weist zwei vertikal bewegliche Absteckstangen auf, die mit mindestens einem im oder am Boden angeordneten Rastmittel verrastbar sind. Damit ist die Absteckvorrichtung besonders einfach und robust aufgebaut und kann manuell oder auch automatisiert bedient werden. Die Absteckstange kann hierbei verschiedenste Profile aufweisen. Bevorzugt weist die Absteckstange ein rundes Profil auf. Es sind jedoch auch eckige oder andere geläufige Profile als Profil der Absteckstange denkbar. Weiterhin kann die Absteckstange auch hohl sein, somit einem runden Rohr oder Hohlprofilen von eckigen oder anderen bekannten Profilen entsprechen. Das Verrasten ist im Wesentlichen spielfrei, so dass der Plattformwagen eine genau definierte Position am Einsatzort einnimmt. Als Rastmittel kommen Öffnungen im Boden, Aufsätze auf dem Boden, Zapfen, Hülsen, Einhausungen oder andere geometrisch definierte Elemente in Betracht.

Die Absteckvorrichtung weist weiterhin zwei Absteckstangen auf, die mittels einer Griffstange miteinander verbunden sind. Durch zwei Absteckstangen wird gegenüber nur einer Rastposition eine verbesserte Ortspositionierung des Plattformwagens erreicht. Aufgrund der Verbindung der zwei Absteckstangen mittels einer Griffstange, können beide Absteckstangen simultan manuell ein- und ausgefahren werden. Weiterhin kann der obere Teil der Absteckvorrichtung als Handgriff zum Bewegen des Plattformwagens verwendet werden.

Bevorzugt ist die Griffstange bei ausgefahrener Absteckvorrichtung in Richtung des Plattformwagens verlagert. Dadurch verkürzt sich vorteilhafterweise die nach oben hervorstehende freie Länge des Handgriffs, wenn der Plattformwagen im Boden verrastet ist. Somit wird der verfügbare Bewegungsraum des Produktionsmittels maximiert.

Die Absteckvorrichtung kann bevorzugt Rastelemente aufweisen, mit denen die Absteckvorrichtung an unterschiedlichen Höhenpositionen bezüglich des Plattformwagens festlegbar ist. Damit kann die Absteckvorrichtung zum Verfahren des Plattformwagens als Handgriff auf eine für den Bediener ergonomisch günstige Höhe eingestellt werden. Zudem ist es durch die Rastelemente möglich, die Absteckvorrichtung in ihrer ausgefahrenen, im Boden verrasteten Stellung mechanisch zu fixieren, was die Standsicherheit des Plattformwagens erhöht.

Bevorzugt weist der Plattformwagen weiterhin ein Positionserkennungselement, zur Detektion der Position der Absteckvorrichtung auf. Durch das Positionserkennungselement kann die Position der Absteckvorrichtung detektiert werden, um sicherzustellen, dass die Absteckvorrichtung korrekt im Boden verrastet ist. Das Detektionsergebnis kann dem Benutzer signalisiert werden, z.B. optisch, und es kann an die Steuerung des Produktionsmittels signalisiert werden, um es bei nicht ordnungsgemäßer Verrastung zu sperren. Fälle von nicht ausreichender Arretierung oder gänzlich unverrastete Plattformwagen können somit mit hoher Sicherheit vermieden werden.

Das Positionserkennungselement kann einen elektrischen Sensor und/oder einen optischen Sensor und/oder einen mechanischen Sensor und/oder ein geometrisches Element aufweisen. Das Positionserkennungselement kann je nach Anwendungsfall unterschiedlich ausgestaltet sein. Mit einem mechanischen Sensor ist beispielsweise eine mechanische Signalisierung der Position der Absteckvorrichtung, beispielsweise durch einen hervorstehenden Signalstift, möglich. Optische Sensoren sind besonders einfach anzusteuern, z.B. durch Unterbrechen eines Strahlenganges, können aber in rauen Produktionsumgebungen leicht verschmutzen. Elektrische Sensoren, wie beispielsweise Schalter, sind kostengünstig, aber erfordern meist eine mechanische Ansteuerung. Das Positionserkennungselement kann auch als geometrisches Element ausgebildet sein, anhand dessen der Benutzer erkennt, dass die Absteckvorrichtung vollständig eingerastet ist. Beispielsweise kann das oberste der Rastelemente der Absteckvorrichtung als geometrisches Element dienen, indem es durch Einrasten auf einer definierten Höhe, die ausreichende Verrastung im Boden dem Benutzer anzeigt.

Das Positionserkennungselement kann bevorzugt einen elektrischen Näherungssensor umfassen, der mit einem Indexierungselement der Absteckvorrichtung kooperiert. Ein elektrischer Näherungssensor reagiert auf das Vorhandensein eines metallischen Gegenstandes und erfordert daher keine direkte mechanische Ansteuerung. Er ist daher leicht ansteuerbar, wenig verschleißanfällig und funktioniert auch in rauen, verschmutzungsanfälligen Produktionsumgebungen.

Der Plattformwagen kann bevorzugt weiterhin ein Signalisierungselement aufweisen, das die ausgefahrene Position der Absteckvorrichtung signalisiert. Damit kann dem Benutzer der Verriegelungszustand sicher angezeigt werden. Das Signalisierungselement kann bevorzugt eine optische Anzeige sein, insbesondere eine Leuchtsäule. Die Anzeige des Verriegelungszustand kann vorzugsweise optisch durch eine Leuchtsäule erfolgen, die beispielsweise durch ein rotes Lichtsignal einen unverriegelten Zustand und durch ein grünes Lichtsignal einen sicher verriegelten Zustand des Plattformwagens anzeigt.

Der Plattformwagen kann bevorzugt weiterhin eine Transporteinheit zum Verfahren des Plattformwagens aufweisen, wobei die Transporteinheit höhenverfahrbare Rollen und Standfüße aufweist, wobei der Plattformwagen bei nach unten ausgefahrenen Rollen mit den Rollen verfahrbar ist und bei nach oben eingefahrenen Rollen mit den Standfüßen auf dem Boden aufsteht. Durch höhenverfahrbare Rollen kann der Plattformwagen zu einem Positionswechsel leicht verfahren werden und bei nach oben eingefahrenen Rollen sicher auf Standfüßen auf dem Boden aufstehen. Somit hat der im Boden verrastete und auf den Standfüßen stehende Plattformwagen einen sehr sicheren Stand und insbesondere eine genau definierte Höhe, was bei Wägen die auf Rollen stehen, nicht der Fall ist. Rollen können sich im Betrieb leicht verschmutzen und beschädigt werden und weisen so in der Praxis keine definierte Höhe auf.

Der Plattformwagen kann weiterhin eine Transporteinheit zum Verfahren des Plattformwagens aufweisen, wobei die Transporteinheit Rollen und höhenverfahrbare Standfüße aufweist, wobei der Plattformwagen bei nach oben eingefahrenen Standfüßen mit den Rollen verfahrbar ist und bei nach unten ausgefahrenen Standfüßen mit diesen auf dem Boden aufsteht. Alternativ oder zusätzlich zu höhenverfahrbaren Rollen kann der Plattformwagen auch mit höhenverfahrbaren Standfüßen ausgerüstet werden. Dann kann der Plattformwagen an der Bearbeitungsposition mittels der Standfüße soweit angehoben werden, dass die Rollen nicht mehr den Boden berühren und der Plattformwagen sicher auf den Standfüßen steht.

Der Plattformwagen kann bevorzugt weiterhin einen Höhenantrieb mit einer Handkurbel zum manuellen Verfahren der höhenverfahrbaren Rollen oder der höhenverfahrbaren Standfüße aufweisen. Ein Höhenantrieb mit einer Handkurbel ist besonders robust und für eine manuelle Höhenverstellung der Rollen oder der Standfüße auch bei einem hohen Gewicht des Plattformwagens mit Produktionsmittel besonders gut geeignet.

Der Plattformwagen kann bevorzugt weiterhin eine Elektrikeinheit, zur Stromversorgung und Steuerung eines Produktionsmittels und/oder eine Pneumatikeinheit, zur Versorgung eines Produktionsmittels mit Druckluft; und/oder eine Funktionsplatte zur mechanischen Fixierung eines Produktionsmittels aufweisen. Der Plattformwagen stellt damit in mobiler Weise die komplette Infrastruktur für den Einsatz des Produktionsmittels bereit.

Die oben genannte Aufgabe wird auch gelöst durch ein Verfahren zum örtlichen Festlegen eines verfahrbaren Plattformwagens für eine ortsflexible Aufstellung von Messmitteln, Montagehilfsmitteln oder Manipulatoren, mit einer nach unten aus dem Plattformwagen ausfahrbaren Absteckvorrichtung, welche zwei vertikal bewegliche Absteckstangen aufweist, die mittels einer Griffstange miteinander verbunden sind, wobei der Plattformwagen bei eingefahrener Absteckvorrichtung verfahrbar ist und bei ausgefahrener Absteckvorrichtung im Boden verrastbar ist, wobei das Verfahren die folgenden Schritte aufweist:
a. Positionieren des Plattformwagens an einer Bearbeitungsposition mittels der Griffstange der Absteckvorrichtung;
b. simultanes Ausfahren der zwei vertikal beweglichen Absteckstangen der Absteckvorrichtung nach unten aus dem Plattformwagen;
c. Verrasten der beiden Absteckstangen der Absteckvorrichtung mit dem Boden. Mit diesem Verfahren kann ein Plattformwagen einfach, komfortabel und sicher mit dem Boden verrastet werden, um an seiner Bearbeitungsposition eingesetzt zu werden.

Das Verfahren kann bevorzugt weiterhin den folgenden Schritt aufweisen:
d. Signalisieren der eingerasteten Position der Absteckvorrichtung.
   Damit kann dem Benutzer und dem Produktionsmittel die sicherere Verrastung des Plattformwagens am Boden angezeigt werden.

Die Absteckvorrichtung ist auch als Handgriff zum Verfahren des Plattformwagens ausgebildet und der Schritt des Positionierens des Plattformwagens wird mit Hilfe der Absteckvorrichtung durchgeführt. Somit ergibt sich eine synergistische Verwendung der Absteckvorrichtung, zum einen als Verrastungsmittel des Plattformwagens und zum anderen als Handgriff zum Bewegen desselben.

### 4. Kurze Beschreibung der Zeichnung

Die vorliegende Erfindung wird exemplarisch anhand eines Beispiels beschrieben, das in den Figuren dargestellt ist. In denen zeigt:
- Fig. 1: eine dreidimensionale Ansicht eines Plattformwagens sowie zwei Rastmittel;
- Fig. 2: eine Seitenansicht des Plattformwagens und der Rastmittel von Figur 1;
- Fig. 3: eine Schnittansicht entlang der Linie A-A des Plattformwagens und der Rastmittel gemäß Figur 2;
- Fig. 4: eine Vorderansicht einer Absteckvorrichtung und Teilen des Plattformwagens sowie der Rastmittel;
- Fig. 5: eine geschnittene Seitenansicht der Absteckvorrichtung sowie Teilen des Plattformwagens und der Rastmittel nach Figur 4;
- Fig. 6: eine geschnittene Detailansicht der Absteckvorrichtung nach Figur 5;
- Fig. 7: eine Detailansicht der Absteckvorrichtung mit Positionserkennungselement und Rastmittel;
- Fig. 8: eine dreidimensionale Ansicht einer Bohrschablone sowie eines Bohrdorns; und
- Fig. 9A - 9C: schematische Seitenansichten eines Plattformwagens beim örtlichen Festlegen.

### 5. Beschreibung eines beispielhaften Plattformwagens

Im Folgenden wird ein beispielhafter Plattformwagen anhand der Figuren beschrieben.

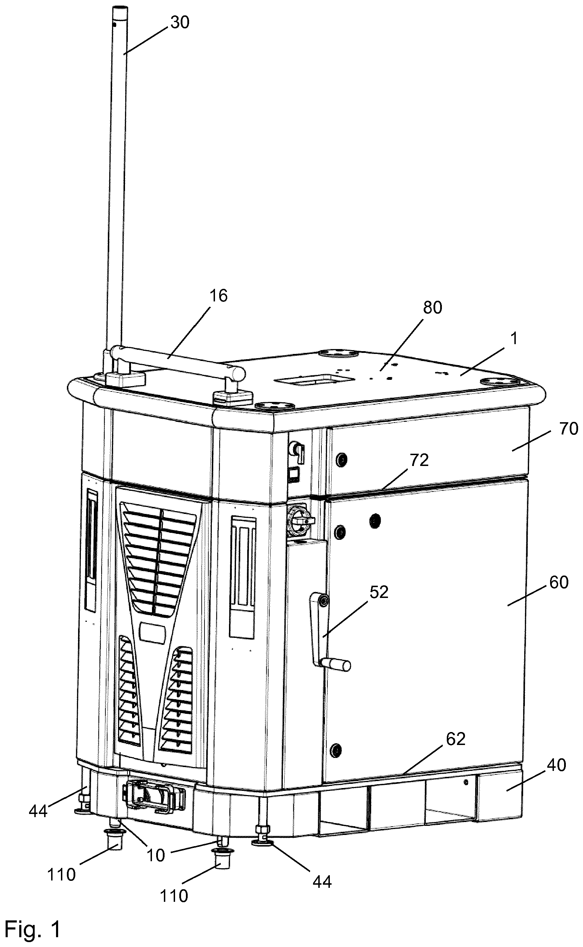

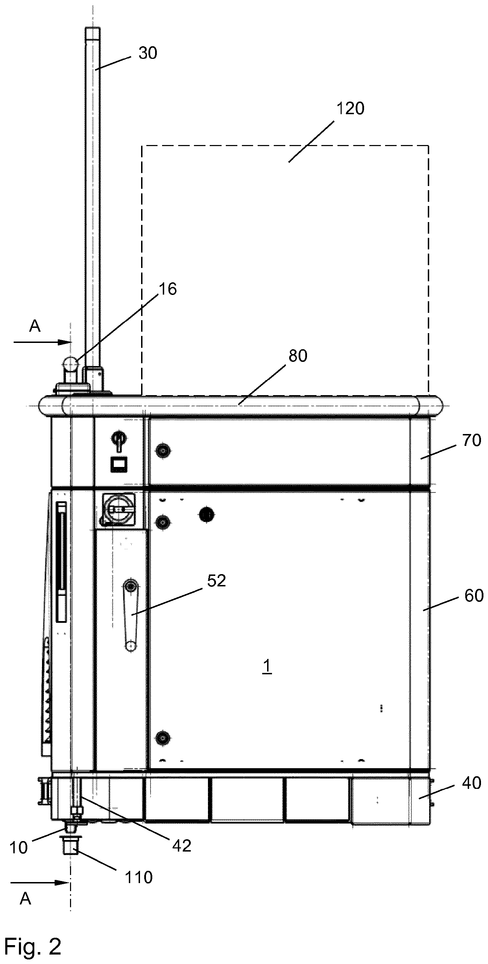

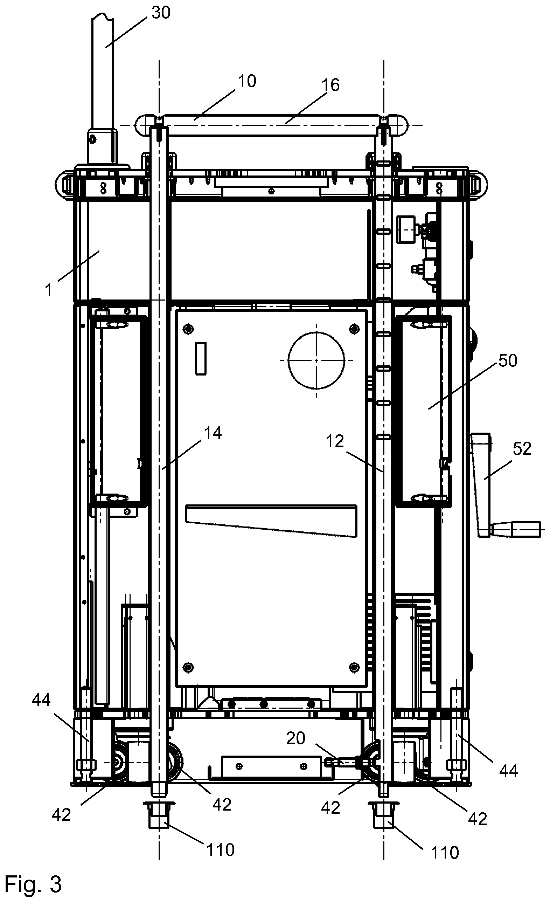

Die Figuren 1 und 2 zeigen einen Plattformwagen 1 für eine ortsflexible Aufstellung von Produktionsmitteln 120, die in Fig. 2 nur schematisch eingezeichnet sind. Der Plattformwagen 1 weist eine Transporteinheit 40, eine Elektrikeinheit 60, eine Pneumatikeinheit 70 sowie eine Montageplatte 80 auf. Die Transporteinheit 40 dient zum Verfahren des Plattformwagens 1 und weist hierzu Rollen 42, insbesondere Lenkrollen (s. Figur 3), auf. Die Elektrikeinheit 60 dient zur Stromversorgung und Steuerung eines Produktionsmittels 120, welches auf der Funktionsplatte 80 mechanisch fixiert werden kann. Als Funktionsmittel 120 kommen beispielsweise Mess- und Prüfmittel sowie Manipulatoren, Handhabungsgeräte oder ähnliche Produktionsmittel 120 in Betracht. Diese können über die Elektrikeinheit 60 mit dem notwendigen elektrischen Strom versorgt und ggf. auch elektronisch angesteuert werden. Wird das Produktionsmittel 120 mit Druckluft betrieben, kann der Plattformwagen 1 mit einer Pneumatikeinheit 70 ausgerüstet werden, die das Produktionsmittel 120 mit Druckluft versorgt. Die Pneumatikeinheit 70 kann jedoch auch entfallen, wenn keine Druckluftversorgung notwendig ist. Mithilfe der Transporteinheit 40 kann der Plattformwagen 100 in der Produktionshalle frei bewegt werden, um das Produktionsmittel 120 flexibel, je nach Bedarf, an unterschiedlichen Positionen einzusetzen. Hierzu kann ein Werker den Plattformwagen 1 auf seinen Rollen 42 frei verfahren.

Der Plattformwagen 1 weist weiterhin eine Absteckvorrichtung 10 auf, die zum örtlichen Festlegen des Plattformwagens 1 an der gewünschten Bearbeitungsposition dient. Die Absteckvorrichtung 10 kann vorteilhafterweise auch als Handgriff zum bequemen Verfahren des Plattformwagens 1 dienen.

Weiterhin weist der Plattformwagen 1 ein Signalisierungselement 30 in Form einer optischen Anzeige, insbesondere einer Leuchtsäule auf. Das Signalisierungselement 30 kann einerseits zur Anzeige des Betriebszustandes des Produktionsmittels 120 dienen, andererseits kann sie auch anzeigen, ob der Plattformwagen sicher an seiner Bearbeitungsposition festgelegt ist oder nicht.

Wie in Figur 1 ersichtlich, weist der Plattformwagen 1 auch Standfüße 44 auf, die bevorzugt höheneinstellbar sind, damit die Funktionsplatte 80 eine horizontale Ebene bildet, wenn der Plattformwagen 1 mittels der Standfüße 44 auf dem Boden steht.

Figur 3 zeigt einen Schnitt entlang der Linie A-A aus Fig. 2 durch den Plattformwagen 1 nach Figur 1 und 2, wobei die Elemente der Absteckvorrichtung 10 genauer ersichtlich sind. Die Absteckvorrichtung 10 umfasst zwei vertikal bezüglich des Plattformwagens 1 bewegliche Absteckstangen 12, 14 sowie eine Griffstange 16, die die Absteckstange 12, 14 an ihrem oberen freiliegenden Ende miteinander verbindet. Die Absteckvorrichtung 10 bildet daher vorteilhafterweise eine U-förmige Anordnung, die oben aus dem Gehäuse des Plattformwagens 1 frei hervorsteht und die somit als Handgriff zum Verfahren des Plattformwagens 1 dient. An ihrem unteren Ende bilden die Absteckstangen 12, 14 jeweils einen Dorn 19 aus, der jeweils vorzugsweise quasi spielfrei in ein entsprechendes im Boden eingelassenes Rastmittel 110 eindringen kann, um die Absteckvorrichtung 10 mit dem Boden 100 zu verrasten. Die Rastmittel 110 sind bevorzugt als Bodenhülsen ausgestaltet. Es sind jedoch auch andere Arten von Rastmitteln 110 möglich, die eine geometrische Positionierung der Absteckstangen 12, 14 ermöglichen. Zum einfachen Einführen der Absteckstangen 12, 14 in oder an die Rastmittel 110 sind die Dorne 19 an ihrem unteren Ende angefast. Das Ausfahren und Einfahren der Absteckvorrichtung 10 kann manuell erfolgen, indem der Bediener die beiden Absteckstangen 12,14 zusammen über den Handgriff 16 auf und ab bewegt.

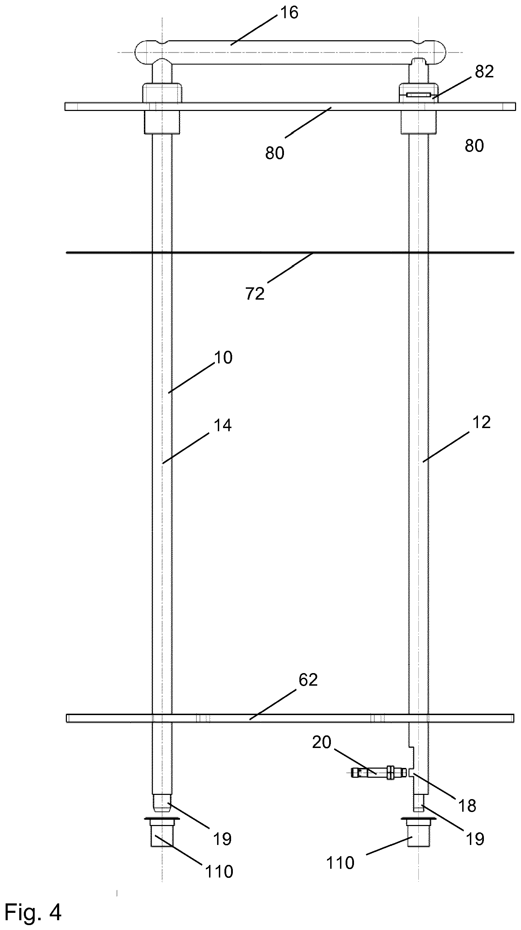

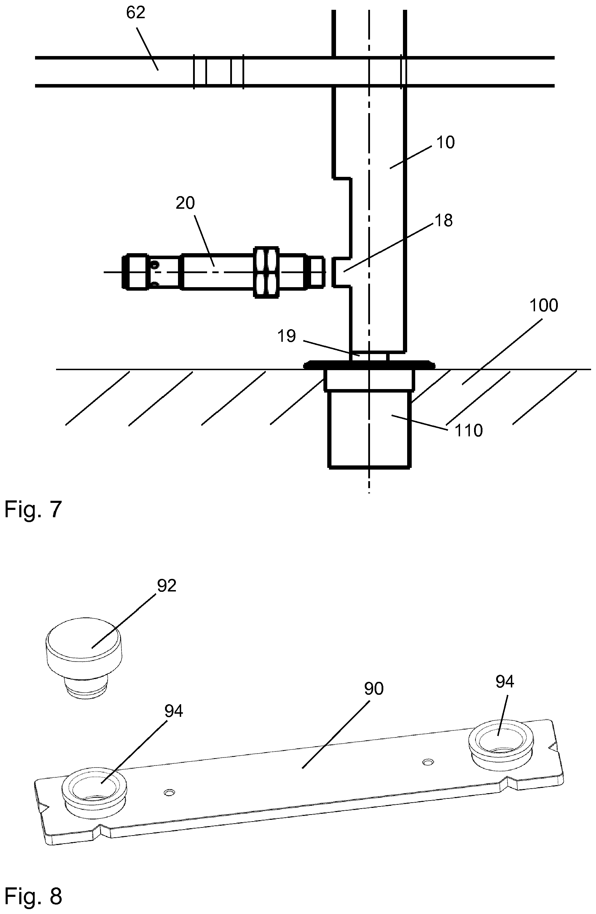

Wie in den Figuren 3 und 4 ersichtlich, kann die Position der Absteckvorrichtung 10 mittels eines Positionserkennungselements 20 detektiert werden. Das Positionserkennungselement 20 kann einen elektrischen Sensor und/oder einen optischen Sensor und/oder einen mechanischen Sensor und/oder ein geometrisches Element 17 umfassen. Vorteilhafterweise wird als Positionserkennungselement 20 ein elektrischer Näherungssensor verwendet, der mit einem Indexierungselement 18 der Absteckvorrichtung 10 zusammenarbeitet. Das Indexierungselement 18 ist als Vorsprung am unteren Ende der beweglichen Absteckstange 12 ausgebildet, der im Wesentlichen senkrecht zur Bewegungsrichtung der Absteckvorrichtung 10 seitlich hervorsteht. In dieser Anordnung kann der Näherungssensor 20 detektieren, ob der Vorsprung 18 ihm gegenüberliegt oder nicht, wenn die Absteckvorrichtung 10 auf und ab bewegt wird. Es sei erwähnt, dass in den Figuren 1 bis 6 zu Darstellungszwecken die Bodenhülse als Rastmittel 110 in einem Abstand zu den Bauteilen des Plattformwagens 1 dargestellt ist, um das Funktionsprinzip besser zu erläutern. Wie in Figur 7 dargestellt, befindet sich jedoch der Dorn 19 innerhalb der Bodenhülse 110, wenn die Absteckvorrichtung 10 ausgefahren ist und wenn das Indexierungselement 18 dem Positionserkennungselement 20 gegenüberliegt. Somit kann das Positionserkennungselement 20 insbesondere die vollständig eingerastete Position der Absteckvorrichtung 10 detektieren.

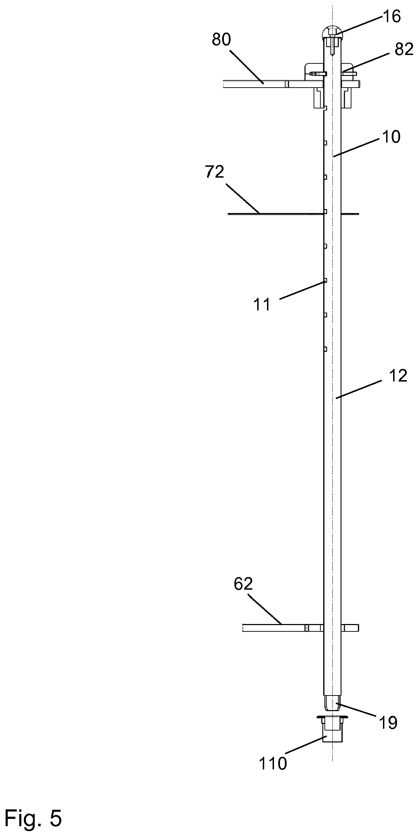

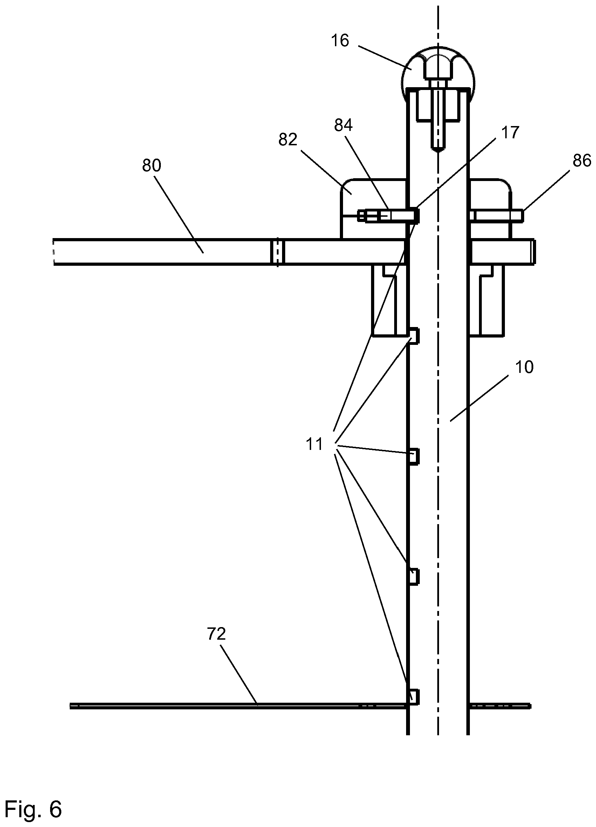

Die Figur 5 zeigt eine geschnittene Ansicht der Absteckvorrichtung 10 von der Seite beim Durchgang durch die Funktionsplatte 80, durch eine untere Platte 72 der Pneumatikeinheit 70 und durch eine untere Platte 62 der Elektrikeinheit 60. Für ihre Funktion als Handgriff beim Verfahren des Plattformwagens 1 ist die Absteckvorrichtung 10 mit einer Anzahl vom seitlich an einer der Absteckstangen 12,14 angeordneten Rastelementen 11 ausgestattet, durch die die Absteckvorrichtung 10 in der Höhe eingestellt und festgelegt werden kann. Die Rastelemente 11 sind als Rastnuten ausgebildet, die mit einer Rastvorrichtung 82 zusammenwirken, die an der Funktionsplatte 80 angeordnet ist. Details der Rastelemente 11 und der Rastvorrichtung 82 sind in Fig. 6 ersichtlich.

Die Rastvorrichtung 82 weist vorzugsweise einen federnd gelagerten Rastbügel 84 auf, der in eine der Rastelemente bzw. Rastnuten 11 eingreifen kann. Bei einem Eingriff ist die Absteckvorrichtung 10 als Handgriff in ihrer Höhe festgelegt. Der Bediener kann den Eingriff des Rastbügels 84 durch Druck auf eine Entriegelungsfläche 86 des Rastbügels 84 lösen, so dass die Absteckvorrichtung 10 höhenverstellbar ist. Damit kann die Höhe des Handgriffs individuell auf eine für den jeweiligen Benutzer ergonomisch passende Höhe eingestellt werden. Vorteilhafterweise kann die Absteckvorrichtung 10 auch in ihrer im oder am Boden verrasteten Stellung festgestellt werden, um so weiterhin die Standsicherheit während des Einsatzes des Produktionsmittels 120 zu erhöhen. Hierbei verrastet die Rastvorrichtung 82 mit der obersten Rastnut 17, was dem Benutzer auch gleichzeitig, im Sinne eines geometrischen Elements, signalisiert, dass die Absteckvorrichtung 10 ausreichend mit dem Boden 100 verrastet ist.

Figur 8 zeigt eine Bohrschablone 90 zum Bohren von genau beabstandeten Löchern für die als Bodenhülsen ausgeformten Rastelemente 110. Mithilfe der Bohrschablone 90 wird insbesondere der genaue Abstand der Rastelemente 110 zueinander festgelegt. Hierzu wird zunächst an einer definierten Position ein erstes senkrechtes Loch in den Hallenboden gebohrt, dann die Bohrschablone 90 an das erste Loch angelegt und der Bohrdorn 92 durch eine der Bohröffnungen 94 in das zuvor gebohrte erste Loch eingesteckt. Dann kann, durch die andere Bohröffnung 94 geführt, ein exakt beabstandetes zweites Loch für ein zweites Rastelement 110 in den Hallenboden gebohrt werden. Beispielhaft beträgt der Bohrungsabstand 330 mm, der Durchmesser der Bohrungen 35 mm und die Bohrtiefe 40 mm.

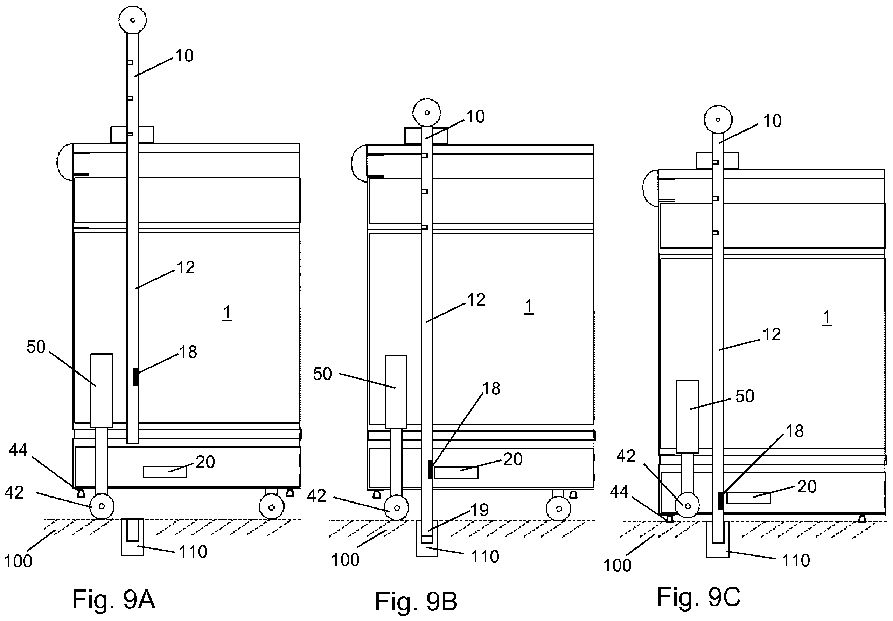

Die Figuren 9A bis 9C zeigen drei verschiedene Schritte des Verfahrens zum örtlichen Festlegen eines verfahrbaren Plattformwagens 1**.** Zunächst wird, wie in Figur 9A dargestellt, der Plattformwagen 1 mittels der Absteckvorrichtung 10 als Handgriff zu der gewünschten Bearbeitungsposition hingefahren. Dann wird, wie in Figur 9B dargestellt, die Absteckvorrichtung 10 nach unten aus dem Plattformwagen 1 herausgefahren, so dass das dornförmige Ende 19 der jeweiligen vertikal beweglichen Absteckstangen 12, 14 in das entsprechende Rastelement 110 eindringt. Ist die Eindringtiefe tief genug, gelangt das Indexierungselement 18 an einer der Absteckstangen 12,14 in den Erkennungsbereich des Positionserkennungselements 20. Das Positionserkennungselement 20 kann dann die genügend ausgefahrene Position der Absteckvorrichtung 10 detektieren, um sie beispielsweise dem Bediener zu signalisieren. Somit hat der Plattformwagen 1 eine genau bestimmte örtliche Position zur Verwendung der an ihm befestigten Produktionsmittel 120 eingenommen. Bei im Boden 100 ver- oder eingerasteter Absteckvorrichtung 10 kann der Plattformwagen 1 nicht mehr verschoben werden.

Nun werden, wie in Figur 9C dargestellt, die höhenbeweglichen Räder 42 mittels eines Höhenantriebs 50 nach oben verfahren, so dass sich der Plattformwagen 1 nach unten bewegt, bis er mit seinen Standfüßen 44 auf dem Boden 100 aufsteht. Die Rollen 42 werden vorzugsweise soweit angehoben, dass sie den Boden 100 nicht mehr berühren, so dass das gesamte Gewicht des Plattformwagens 1 auf den Standfüßen 44 lastet. In der in Figur 9C gezeigten Position nimmt der Plattformwagen 1 aufgrund seiner Verrastung durch die Absteckvorrichtung 10 im oder am Boden 100 und dem sicheren Stand auf den Standfüßen 44 eine ortsfeste Position ein und kann hohe Quer- und Kippkräfte aufnehmen. Entsprechend können auf dem Plattformwagen 1 befestigte Produktionsmittel 120 ausreichend hohe Kräfte für die gewünschte Tätigkeit aufbringen. Der Höhenantrieb 50 wird bevorzugt manuell mit Hilfe einer Handkurbel 52 betrieben.

In einer Variante des Plattformwagens 1 sind die Rollen 42 nicht höhenverfahrbar und stattdessen die Standfüße 44. Entsprechend werden zur Festlegung eines sicheren Stands des Plattformwagens 1 die Standfüße 44 mithilfe des Höhenantriebs 50 in Richtung Boden ausgefahren, bis der Plattformwagen 1 angehoben wird und die Rollen 42 nicht mehr den Boden berühren.

### Bezugszeichenliste:

- 1: Plattformwagen
- 10: Absteckvorrichtung
- 11: Rastelement
- 12, 14: Absteckstange
- 16: Griffstange
- 17: geometrisches Element/oberes Rastelement
- 18: Indexierungselement
- 19: Dorn
- 20: Positionierungselement
- 30: Signalisierungselement
- 40: Transporteinheit
- 42: Rollen
- 44: Standfüße
- 50: Höhenantrieb
- 52: Handkurbel
- 60: Elektrikeinheit
- 70: Pneumatikeinheit
- 80: Funktionsplatte
- 62: Platte
- 72: Platte
- 82: Rastvorrichtung
- 84: Rastbügel
- 86: Entriegelungsfläche
- 100: Boden
- 110: Rastmittel
- 120: Produktionsmittel

## Patentansprüche

1. Plattformwagen (1) für eine ortsflexible Aufstellung von Messmitteln, Montagehilfsmitteln oder Manipulatoren (120), aufweisend eine nach unten aus dem Plattformwagen ausfahrbare Absteckvorrichtung (10), wobei der Plattformwagen (1) bei eingefahrener Absteckvorrichtung (10) verfahrbar ist und bei ausgefahrener Absteckvorrichtung (10) mit dem Boden (100) verrastbar ist, wobei die Absteckvorrichtung (10) zwei vertikal bewegliche Absteckstangen (12, 14) aufweist, die mit im oder am Boden angeordneten Rastmitteln (110) verrastbar sind, **dadurch gekennzeichnet, dass** die zwei Absteckstangen (12, 14) mittels einer Griffstange (16) miteinander verbunden sind.

2. Plattformwagen nach Anspruch 1, wobei die Griffstange (16) bei ausgefahrener Absteckvorrichtung (10) in Richtung des Plattformwagens (1) verlagert ist.

3. Plattformwagen nach einem der Ansprüche 1 - 2, wobei die Absteckvorrichtung (10) Rastelemente (11) aufweist, mit denen die Absteckvorrichtung (10) an unterschiedlichen Höhenpositionen bezüglich des Plattformwagens (1) festlegbar ist.

4. Plattformwagen nach einem der Ansprüche 1 - 3, weiterhin aufweisend ein Positionserkennungselement (20), zur Detektion der Position der Absteckvorrichtung (10).

5. Plattformwagen nach Anspruch 4, wobei das Positionserkennungselement (20) umfasst:
a. einen elektrischen Sensor; und/oder
b. einen optischen Sensor; und/oder
c. einen mechanischen Sensor; und/oder
d. ein geometrisches Element (17).

6. Plattformwagen nach einem der Ansprüche 4 oder 5 wobei das Positionserkennungselement (20) einen elektrischen Näherungssensor umfasst, der mit einem Indexierungselement (18) der Absteckvorrichtung (10) kooperiert.

7. Plattformwagen nach einem der Ansprüche 1 - 6, weiterhin aufweisend ein Signalisierungselement (30), das die ausgefahrene Position der Absteckvorrichtung (10) signalisiert, wobei das Signalisierungselement (30) bevorzugt eine optische Anzeige, insbesondere eine Leuchtsäule ist.

8. Plattformwagen nach einem der Ansprüche 1 - 7, weiterhin aufweisend eine Transporteinheit (40) zum Verfahren des Plattformwagens (1),
a. wobei die Transporteinheit (40) höhenverfahrbare Rollen (42) und Standfüße (44) aufweist, wobei der Plattformwagen (1) bei nach unten ausgefahrenen Rollen (42) mit den Rollen (42) verfahrbar ist und bei nach oben eingefahrenen Rollen (42) mit den Standfüßen (44) auf dem Boden (100) aufsteht; und/oder
b. wobei die Transporteinheit (40) Rollen (42) und höhenverfahrbare Standfüße (44) aufweist, wobei der Plattformwagen (1) bei nach oben eingefahrenen Standfüßen (44) mit den Rollen (42) verfahrbar ist und bei nach unten ausgefahrenen Standfüßen (44) mit diesen auf dem Boden (100) aufsteht.

9. Plattformwagen nach Anspruch 8, weiterhin aufweisend einen Höhenantrieb (50) mit einer Handkurbel (52) zum manuellen Verfahren der höhenverfahrbaren Rollen (42) oder der höhenverfahrbaren Standfüße (44).

10. Plattformwagen nach einem der Ansprüche 1 - 9, weiterhin aufweisend:
a. eine Elektrikeinheit (60), zur Stromversorgung und Steuerung eines Produktionsmittels (120); und/oder
b. eine Pneumatikeinheit (70), zur Versorgung eines Produktionsmittels (120) mit Druckluft; und/oder
c. eine Funktionsplatte (80) zur mechanischen Fixierung eines Produktionsmittels (120).

11. Verfahren zum örtlichen Festlegen eines verfahrbaren Plattformwagens (1) für Messmittel, Montagehilfsmittel oder Manipulatoren (120), mit einer nach unten aus dem Plattformwagen (1) ausfahrbaren Absteckvorrichtung (10), welche zwei vertikal bewegliche Absteckstangen (12, 14) aufweist, die mittels einer Griffstange (16) miteinander verbunden sind, wobei der Plattformwagen (1) bei eingefahrener Absteckvorrichtung (10) verfahrbar ist und bei ausgefahrener Absteckvorrichtung (10) im Boden (100) verrastbar ist, wobei das Verfahren die folgenden Schritte aufweist:
a. Positionieren des Plattformwagens (1) an einer Bearbeitungsposition mittels der Griffstange (16) der Absteckvorrichtung (10);
b. simultanes Ausfahren der zwei vertikal beweglichen Absteckstangen (12, 14) der Absteckvorrichtung (10) nach unten aus dem Plattformwagen (1); und
c. Verrasten der beiden Absteckstangen (12, 14) der Absteckvorrichtung (10) mit dem Boden (100).

12. Verfahren nach Anspruch 11 weiterhin aufweisend den folgenden Schritt:
d. Signalisieren der eingerasteten Position der Absteckvorrichtung (1).

## Claims

1. Platform trolley (1) for location flexible installation of measuring equipment, mounting equipment or manipulators (120), comprising:
a downwardly extending locking device (10) which can be extended by the platform trolley, the platform trolley (1) being movable when the locking device (10) is retracted and being lockable to the floor (100) when the locking device (10) is extended,
wherein the locking device (10) comprises two vertically movable locking rods (12,14) which are lockable with latching means (110) arranged on the floor, **characterized in that** the two locking rods (12, 14) are connected to each other by a handlebar (16).

2. Platform trolley according to Claim 1, wherein the handlebar (16) is transposed in the direction of the platform trolley (1), when the locking device (10) is extended.

3. Platform trolley according to one of the claims 1- 2, wherein the locking device (10) comprises locking elements (11) with which the locking device (10) can be fixed at different height positions relative to the platform trolley (1).

4. Platform trolley according to one of claims 1 - 3, further comprising a position detection element (20) for detecting the position of the locking device (10).

5. Platform trolley according to claim 4, wherein the position detection element (20) comprises:
a. an electrical sensor; and/or
b. an optical sensor; and/or
c. a mechanical sensor; and/or
d. a geometric element (17).

6. Platform trolley according to any of claims 4 or 5, wherein the position detecting element (20) comprises an electrical proximity sensor cooperating with an indexing element (18) of the locking device (10).

7. Platform trolley according to any of claims 1 - 6, further comprising,
a signaling element (30) which signals the extended position of the locking device (10), wherein the signaling element (30) preferably is an optical display and in particular a lighting column.

8. Platform trolley according to any of the claims 1 - 7, further comprising a transport unit (40) for moving the platform trolley (1),
a. wherein the transport unit (40) comprises vertically movable pulleys (42) and feet (44), wherein the platform trolley (1) is movable with the pulleys (42) when the pulleys (42) are extended downwards and stands with the feet (44) on the floor (100) when the pulleys (42) are retracted upwards; and/or
b. wherein the transport unit (40) comprises pulleys (42) and vertically movable feet (44), wherein the platform trolley (1) is movable with the pulleys (42) when the feet are retracted upwards and stands on the floor (100) with the feet (44) extended downwards.

9. Platform trolley according to claim 8, further comprising a height drive (50) with a hand crank (52) for manually moving the vertically movable pulleys (42) or the vertically movable feet (44).

10. Platform trolley according to any of claims 1 - 9, further comprising:
a. an electric unit (60) for supplying power to and controlling a production means (120); and/or
b. a pneumatic unit (70) for supplying a production means (120) with compressed air; and/or
c. a functional plate (80) for mechanically fixing a production means (120).

11. Method for locally fixing a movable platform trolley (1) for measuring equipment, mounting equipment or manipulators (120), comprising a locking device (10) which can be extended downwards from the platform trolley (1) and which has two vertically movable locking rods (12, 14), which are connected to each other by means of a handle bar, wherein the platform trolley (1) being movable when the locking device (10) is retracted and being lockable in the floor (100) when the locking device (10) is extended, the method comprising the following steps:
a. positioning the platform trolley (1) at a working position by means of the handle bar (16) of the locking device (10);
b. simultaneous extending of the two vertically movable locking rods (12, 14) of the locking device (10) downwards from the platform trolley (1); and
c. locking of the two locking rods (12, 14) of the locking device (10) to the floor (100).

12. Method according to claim 11 further comprising the following step:
d. signaling the locked position of the locking device (1).

## Revendications

1. Chariot à plateforme (1) pour une mise en oeuvre mobile de moyens de mesure, d'auxiliaires de montage ou de manipulateurs (120), comprenant un dispositif d'implantation (10) sortant vers le bas hors du chariot à plateforme, dans lequel le chariot à plateforme (1) est déplaçable avec le dispositif d'implantation (10) rentré et peut être verrouillé au sol (100) avec le dispositif de verrouillage (10) sorti, dans lequel le dispositif d'implantation (10) comporte deux barres d'implantation mobiles verticalement (12, 14) qui sont verrouillables avec des moyens de verrouillage (110) disposés dans ou sur le sol, **caractérisé en ce que** les deux barres d'implantation (12, 14) sont reliées entre elles au moyen d'une barre de préhension (16).

2. Chariot à plateforme selon la revendication 1, dans lequel la barre de préhension (16) est déplacée en direction du chariot à plateforme (1) lorsque le dispositif d'implantation (10) est sorti.

3. Chariot à plateforme selon l'une des revendications 1 et 2, dans lequel le dispositif d'implantation (10) comporte des éléments de verrouillage (11) à l'aide desquels le dispositif d'implantation (10) peut être immobilisé dans différentes positions en hauteur par rapport au chariot à plateforme (1).

4. Chariot à plateforme selon l'une des revendications 1 à 3, comprenant en outre un élément de reconnaissance de position (20) pour détecter la position du dispositif d'implantation (10).

5. Chariot à plateforme selon la revendication 4, dans lequel l'élément de reconnaissance de position (20) comprend :
a. un capteur électrique ; et/ou
b. un capteur électrique ; et/ou
c. un capteur mécanique ; et/ou
d. un élément géométrique (17).

6. Chariot à plateforme selon l'une des revendications 4 ou 5, dans lequel l'élément de reconnaissance de position (20) comprend un capteur électrique de proximité qui coopère avec un élément d'indexation (18) du dispositif d'implantation (10).

7. Chariot à plateforme selon l'une des revendications 1 à 6, comprenant en outre un élément de signalisation (30) qui signale la position sortie du dispositif d'implantation (10), l'élément de signalisation (30) étant de préférence un indicateur optique, en particulier une colonne lumineuse.

8. Chariot à plateforme selon une des revendications 1 à 7, comprenant en outre une unité de transport (40) pour déplacer le chariot à plateforme (1),
a. dans lequel l'unité de transport (40) comporte des roulettes déplaçables en hauteur (42) et des pieds (44), le chariot à plateforme (1) pouvant, lorsque les roulettes (42) sont sorties vers le bas, être déplacé avec les roulettes (42) et, lorsque les roulettes (42) sont rentrées vers le haut, reposant sur le sol (100) par les pieds (44) ; et/ou
b. dans lequel l'unité de transport (40) comporte des roulettes (42) et des pieds déplaçables en hauteur (44), le chariot à plateforme (1) pouvant, lorsque les pieds (44) sont rentrés vers le haut, être déplacé avec les roulettes (42) et, lorsque les pieds (44) sont sortis vers le bas, reposant sur le sol (100) par ceux-ci.

9. Chariot à plateforme selon la revendication 8, comprenant en outre un entraînement en hauteur (50) avec une manivelle (52) pour déplacer manuellement les roulettes déplaçables en hauteur (42) ou les pieds déplaçables en hauteur (44).

10. Chariot à plateforme selon l'une des revendications 1 à 9, comprenant en outre :
a. une unité électrique (60) pour l'alimentation électrique et la commande d'un moyen de production (120) ; et/ou
b. une unité pneumatique (70) pour alimenter un moyen de production (120) en air comprimé ; et/ou
c. un plateau fonctionnel (80) pour la fixation mécanique d'un moyen de production (120).

11. Procédé d'immobilisation locale d'un chariot à plateforme mobile (1) pour des moyens de mesure, des auxiliaires de montage ou des manipulateurs (120), comprenant un dispositif d'implantation (10) qui sort vers le bas hors du chariot à plateforme (1) et qui comporte deux barres d'implantation mobiles verticalement (12, 14) qui sont reliées entre elles au moyen d'une barre de préhension (16), dans lequel le chariot à plateforme (1) est déplaçable avec le dispositif d'implantation (10) rentré et peut être verrouillé au sol (100) avec le dispositif de verrouillage (10) sorti, le procédé comprenant les étapes suivantes :
a. positionnement du chariot à plateforme (1) dans une position de travail au moyen de la position de base (16) du dispositif d'implantation (10) ;
b. sortie simultanée des deux barres d'implantation mobiles verticalement (12, 14) du dispositif d'implantation (10) vers le bas hors du chariot à plateforme (1) ; et
c. verrouillage des deux barres d'implantation (12, 14) du dispositif d'implantation (10) avec le sol (100).

12. Procédé selon la revendication 11, comprenant en outre l'étape suivante :
d. signalisation de la position verrouillée du dispositif d'implantation (1).
